# EUROPÄISCHE PATENTSCHRIFT

(11) **EP 2 190 913 B1**
(45) Veröffentlichungstag und Bekanntmachung des Hinweises auf die Patenterteilung: **29.07.2015**
(21) Anmeldenummer: 08786865.9
(22) Anmeldetag: 05.08.2008
(51) Int. Cl.: C08K 5/09, C08F 220/04, C08F 222/02, C08F 226/06, C14C 3/00, A61Q 19/04

(54) **VERFAHREN ZUR HERSTELLUNG VON WÄSSRIGEN FORMULIERUNGEN, WÄSSRIGE FORMULIERUNGEN UND IHRE VERWENDUNG**
METHOD FOR THE PRODUCTION OF AQUEOUS FORMULATIONS, AQUEOUS FORMULATIONS, AND THE USE THEREOF
PROCÉDÉ DE PRODUCTION DE FORMULATIONS AQUEUSES, FORMULATIONS AQUEUSES ET LEUR UTILISATION

(30) Priorität: 03.09.2007 EP 07115514; 03.09.2007 EP 07115518; 04.09.2007 EP 07115644; 10.12.2007 EP 07122718; 29.01.2008 EP 08101060
(43) Veröffentlichungstag der Anmeldung: 02.06.2010
(73) Patentinhaber: BASF SE, 67056 Ludwigshafen (DE)
(72) Erfinder: BRYM, Markus, 68163 Mannheim (DE); HÜFFER, Stephan, 67063 Ludwigshafen (DE); RENONCOURT, Audrey, 67059 Ludwigshafen (DE); MAHN, Ulrike, 68165 Mannheim (DE); GLOCKNITZER, Franz, 67480 Edenkoben (DE); BRUHN, Alexandra, 67697 Otterberg (DE)
(86) Internationale Anmeldenummer: PCT/EP2008/060254
(87) Internationale Veröffentlichungsnummer: WO 2009/030566

(56) Entgegenhaltungen:
- WO-A-2005/005497
- US-A- 5 425 784
- US-A- 5 714 560

## Beschreibung

Die vorliegende Erfindung betrifft ein Verfahren zur Herstellung von wässrigen Formulierungen, dadurch gekennzeichnet, dass man
(A) mindestens eine ethylenisch ungesättigte Carbonsäure,
(B) mindestens ein heterocyclisches Comonomer mit mindestens einer permanenten kationischen Ladung pro Molekül und
(C-P1) mindestens eine ethylenisch ungesättigte Dicarbonsäure oder ihr Anhydrid miteinander in wässrigem Medium radikalisch copolymerisiert und kurz vor Abschluss oder nach Abschluss der Copolymerisation weitere ethylenisch ungesättigte Dicarbonsäure (C-P2) oder ihr Anhydrid zusetzt.

Weiterhin betrifft die vorliegende Erfindung wässrige Formulierungen, enthaltend mindestens ein Copolymer (D), erhältlich durch Copolymerisation von
(A) mindestens einer ethylenisch ungesättigten Carbonsäure,
(B) mindestens einem heterocyclischen Comonomer mit mindestens einer permanenten kationischen Ladung pro Molekül und
(C-P1) mindestens einer ethylenisch ungesättigten Dicarbonsäure oder ihrem Anhydrid,
(CP-2) mindestens eine ethylenisch ungesättigte Dicarbonsäure oder ihr Anhydrid und (E) gegebenenfalls mindestens ein polymeres Gerb- oder Nachgerbmittel.

Weiterhin betrifft die vorliegende Erfindung die Verwendung von erfindungsgemäßen wässrigen Formulierungen zur Herstellung von Leder sowie erfindungsgemäß hergestellte Leder, die sich insbesondere zur Herstellung von Schuhoberleder, Bekleidungsstücken und Möbeln eignen. Weiterhin betrifft die vorliegende Erfindung Copolymere (D) und ihre Mischung mit mindestens einer ethylenisch ungesättigten Dicarbonsäure oder ihrem Anhydrid.

In vielen Anwendungen, insbesondere zur Herstellung von Schuhoberleder, Bekleidung und Möbeln, besteht ein Bedarf an weichen Ledern, das sind Leder, die sich weich und voll anfühlen, dennoch aber eine ausreichende Festigkeit aufweisen. Um hinreichend weiche Leder herzustellen, kann man nicht nur das Finish entsprechend wählen, sondern auch bereits bei der Gerbung oder insbesondere der Nachgerbung durch Wahl eines geeigneten Gerb- oder Nachgerbmittels die Weichheit beeinflussen.

Es ist bekannt, dass man wässrige Formulierungen von (Co)polymeren von ethylenisch ungesättigten Carbonsäuren als Gerb- oder Nachgerbmittel einsetzen kann. Einige (Co)polymere von ethylenisch ungesättigten Carbonsäuren liefern jedoch keine hinreichend weiche Leder.

Es bestand also die Aufgabe, ein Verfahren bereit zu stellen, durch das man wässrige Formulierungen herstellen kann, die zur Herstellung von besonders weichen und vollen Ledern, die eine gute Festigkeit aufweisen und sich gut färben lassen, geeignet sind. Es bestand weiterhin die Aufgabe, wässrige Formulierungen bereit zu stellen, die zur Herstellung von besonders weichen und vollen Ledern, die eine gute Festigkeit aufweisen und sich gut färben lassen, geeignet sind. Außerdem bestand die Aufgabe, besonders weiche und volle Leder, die eine gute Festigkeit aufweisen und sich gut färben lassen, und Verwendungsmöglichkeiten bereit zu stellen.

Dementsprechend wurde das eingangs definierte Verfahren gefunden, im Folgenden auch erfindungsgemäßes Herstellungsverfahren genannt.

Zur Ausführung des erfindungsgemäßen Herstellungsverfahrens copolymerisiert man miteinander in vorzugsweise wässrigem Medium:
(A) mindestens eine ethylenisch ungesättigte Carbonsäure, bevorzugt mindestens eine ethylenisch ungesättigte C₃-C₁₀-Carbonsäure, beispielsweise (E)- oder (Z)-Crotonsäure oder insbesondere Methacrylsäure oder Acrylsäure,
(B) mindestens ein heterocyclisches Comonomer mit mindestens einer permanenten kationischen Ladung pro Molekül, bevorzugt genau einer permanenten kationischen Ladung pro Molekül, und
(C-P1) mindestens eine ethylenisch ungesättigte Dicarbonsäure oder ihr Anhydrid
und setzt kurz vor Abschluss oder kurz nach Abschluss der Copolymerisation, also dann, wenn die Copolymerisationsreaktion als solche bereits fast oder vollständig zum Stillstand gekommen ist, weitere ethylenisch ungesättigte Dicarbonsäure (C-P2) oder ihr Anhydrid zu.

Vorzugsweise wählt man ein Gewichtsverhältnis (C-P1) zu (C-P2) im Bereich von 1:10 bis 10:1, bevorzugt 1:5 bis 5:1, besonders bevorzugt 1:1,5 bis 1,5:1.

Dabei sind unter heterocylischen Comonomeren mit mindestens einer permanenten kationischen Ladung pro Molekül (B), im Rahmen der vorliegenden Erfindung auch kurz Comonomer (B) genannt, solche ethylenisch ungesättigten Verbindungen zu verstehen, die unabhängig vom pH-Wert mindestens eine kationische Ladung pro Molekül aufweisen. Dementsprechend sind unter Comonomeren mit genau einer permanenten kationischen Ladung pro Molekül solche ethylenisch ungesättigte Verbindungen zu verstehen, die unabhängig vom pH-Wert genau eine kationische Ladung pro Molekül aufweisen.

Beispiele für heterocyclische Comonomere (B) sind mit C₁-C₄-Alkyl, vorzugsweise mit primärem oder sekundären C₁-C₄-Alkyl wie Methyl, Ethyl, n-Propyl, iso-Propyl, n-Butyl, iso-Butyl oder sec.-Butyl quaternierte Olefine mit Stickstoff-haltigem Heterocyclus.

Als Gegenion A⁻ zur Neutralisierung der positiven Ladung können allgemein Anionen dienen, die gegenüber radikalischen Reaktionen inert sind, beispielsweise Carboxylate ohne ethylenische Doppelbindungen. Beispielhaft seien Acetate, Benzoate und Propionate genannt. Weiterhin sind als Gegenion Halogenidionen, beispielsweise Bromid und insbesondere Chlorid zu nennen, außerdem Tetrafluoroborat, Hydrogensulfat, C₁-C₄-Alkylsulfat wie insbesondere Ethylsulfat und Methylsulfat und außerdem Sulfat.

Beispiele für heterocyclische Comonomere (B) sind Comonomere der allgemeinen Formeln I a bis I c 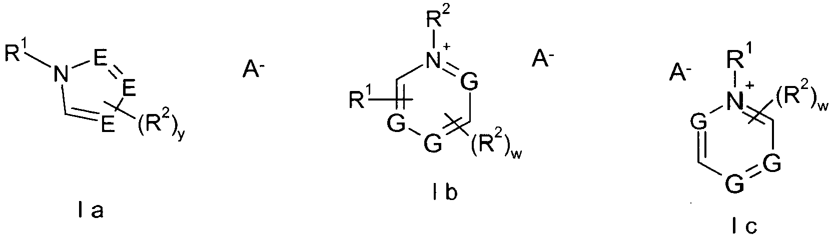 wobei die Variablen wie folgt gewählt sind:
R¹ ist gewählt aus C₂-ω-C₁₀-Alkenyl, beispielsweise Vinyl-, ω-Allyl (CH₂=CH-CH₂-), im Rahmen der vorliegenden Erfindung kurz als Allyl bezeichnet, wenn nicht ausdrücklich anders angegeben, ω-Homoallyl (CH₂=CH-CH₂-CH₂-), bevorzugt Allyl und besonders bevorzugt Vinyl.
R² ist, sofern möglich, verschieden oder vorzugsweise gleich und gewählt aus vorzugsweise primärem C₁-C₁₀-Alkyl, beispielsweise Methyl, Ethyl, n-Propyl, n-Butyl, n-Pentyl, n-Hexyl, n-Heptyl, n-Octyl, n-Nonyl, n-Decyl, bevorzugt aus primärem C₁-C₄-Alkyl wie Methyl, Ethyl, n-Propyl, n-Butyl und insbesondere Methyl,
y ist eine ganze Zahl und gewählt aus 1, 2 oder 3. vorzugsweise ist y = 1,
w ist eine ganze Zahl und gewählt aus null, 1, 2 oder 3, vorzugsweise gilt w = 1 und besonders bevorzugt gilt w = null.
E ist gewählt aus Stickstoff und C-H, wobei mindestens ein E ein Stickstoff ist und wobei es bevorzugt ist, dass in Formel I a maximal zwei benachbarte Positionen im Ring Stickstoff sind. So können Olefine der allgemeinen Formel I a vorzugsweise sein: 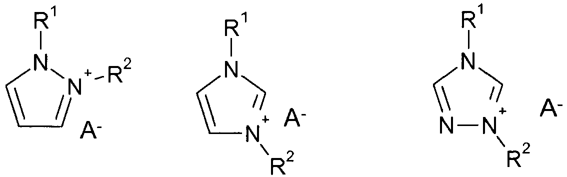
G ist gewählt aus N und C-H mit der Maßgabe, dass für den Fall, dass G gleich N ist, das betreffende G nicht durch R² substituiert ist.
A- ist ein Anion, das gegenüber radikalischen Reaktionen inert ist, beispielsweise Carboxylate ohne ethylenische Doppelbindungen. Beispielhaft seien Acetate, Benzoate und Propionate genannt. Weiterhin sind als Anion Halogenidionen, beispielsweise Bromid und insbesondere Chlorid zu nennen, außerdem Tetrafluoroborat, Hydrogensulfat, C₁-C₄-Alkylsulfat wie insbesondere Ethylsulfat und Methylsulfat und außerdem Sulfat.

Besonders bevorzugte heterocyclische Comonomere (B) sind mit C₁-C₄-Alkyl, vorzugsweise mit primärem oder sekundären C₁-C₄-Alkyl quaterniertes ortho-, meta- oder para-Vinyl-n-C₁-C₄-Alkyl-pyridinium oder N-Vinyl-3-C₁-C₄-Alkyl-imidazolium. Ganz besonders bevorzugt ist 3-Methyl-N-vinylimidazolium.

Weiteres Comonomer ist mindestens eine ethylenisch ungesättigte Dicarbonsäure (C-P1) oder ihr Anhydrid, bevorzugt mindestens eine ethylenisch ungesättigte C₃-C₁₀-Dicarbonsäure oder ihr Anhydrid, beispielsweise Maleinsäure, Maleinsäureanhydrid, Fumarsäure, Itaconsäure, Itaconsäureanhydrid, Metaconsäure, Metaconsäureanhydrid und Citraconsäure. Bevorzugt sind Itaconsäureanhydrid und insbesondere Maleinsäureanhydrid.

In einer Ausführungsform der vorliegenden Erfindung setzt man eine Mischung eines Anhydrids einer ethylenisch ungesättigten Dicarbonsäure (C-P1) und der entsprechenden ethylenisch ungesättigten Dicarbonsäure (C-P1) ein, beispielsweise eine Mischung von Itaconsäureanhydrid und Itaconsäure oder bevorzugt eine Mischung von Maleinsäureanhydrid und Maleinsäure. Die Mischungsverhältnisse von Anhydrid einer ethylenisch ungesättigten Dicarbonsäure (C-P1) und der entsprechenden ethylenisch ungesättigten Dicarbonsäure (C-P1) können dabei beliebig sein. In einer speziellen Variante der vorliegenden Erfindung setzt man ein Anhydrid einer ethylenisch ungesättigten Dicarbonsäure (C-P1) ein, das mit 0,05 bis 10 Gew.-% der entsprechenden ethylenisch ungesättigten Dicarbonsäure (C-P1) verunreinigt ist.

Als Gewichtsanteil von (C-P1) gilt dabei im Rahmen der vorliegenden Erfindung jeweils die gesamte eingesetzte Menge von ethylenisch ungesättigter Dicarbonsäure (C-P1) und/oder ihrem Anhydrid.

Zur Durchführung des erfindungsgemäßen Herstellungsverfahrens copolymerisiert man in wässrigem Medium, vorzugsweise in wässriger Lösung.

Zur Durchführung des erfindungsgemäßen Herstellungsverfahrens copolymerisiert man vorzugsweise radikalisch, d. h. unter Verwendung von mindestens einem anorganischen oder organischen Radikalstarter wie beispielsweise einem Peroxid oder Hydroperoxid. Als Peroxide bzw. Hydroperoxide seien Di-tert.-Butylperoxid, tert.-Butylperoctoat, tert.-Butylperpivalat, tert.-Butylper-2-ethylhexanoat, tert.-Butylpermaleinat, tert.-Butylperisobutyrat, Benzoylperoxid, Diacetylperoxid, Succinylperoxid, p-Chlorbenzoylperoxid und Dicyclohexylperoxiddicarbonat beispielhaft genannt.

Beispiele für anorganische Radikalstarter sind Alkalimetallperoxodisulfat, insbesondere Natriumperoxodisulfat und Kaliumperoxodisulfat. Auch der Einsatz von Redoxinitiatoren ist geeignet, beispielsweise Kombinationen aus Wasserstoffperoxid oder Natriumperoxodisulfat oder einem der vorstehend genannten Peroxide mit mindestens einem Oxidations- oder Reduktionsmittel, die man auch als katalytische Aktivatoren bezeichnen kann. Als Reduktionsmittel sind beispielsweise geeignet: Ascorbinsäure, Weinsäure, Fe(II)-Salze wie beispielsweise FeSO₄, Natriumbisulfit, Kaliumbisulfit. Als Oxidationsmittel sind beispielsweise Kupfer-(II)-Salze geeignet wie Kupfersulfat.

Geeignete Radikalstarter sind außerdem Azoverbindungen wie 2,2'-Azobis(isobutyronitril), 2,2'-Azobis(2-amidinopropan)dihydrochlorid (2,2'-Azobis(2-methylpropion-amidin)dihydrochlorid) und 2,2'-Azobis(4-methoxy-2,4-dimethylvaleronitril).

In einer Ausführungsform der vorliegenden Erfindung kann man die Copolymerisation bei Drücken im Bereich von 1,1 bis 10 bar durch. Bevorzugt ist es jedoch, die Copolymerisation bei Normaldruck durchzuführen.

In einer Ausführungsform der vorliegenden Erfindung führt man die Copolymerisation bei Temperaturen im Bereich von 65 bis 120°C, bevorzugt 80 bis 115°C durch.

In einer Ausführungsform der vorliegenden Erfindung führt man die Copolymerisation über einen Zeitraum im Bereich von 30 Minuten bis zu 10 Stunden durch.

In einer Ausführungsform der vorliegenden Erfindung führt man die Copolymerisation bei einem pH-Wert im Bereich von 1 bis 10, bevorzugt von 1 bis 7 durch.

Einige der Comonomere können stark sauer sein, in dem Fall kann man mit Hilfe von Base den pH-Wert einstellen.

In einer Ausführungsform der vorliegenden Erfindung verwendet man zum Einstellen des pH-Wertes eine oder mehrere flüchtige Basen, beispielsweise Ammoniak und bevorzugt Amine wie beispielsweise Ethanolamin, Diethanolamin, N-Methyldiethanolamin, 1-Amino-2-propanol, N,N-Dimethylethanolamin, Diethylentriamin, Ethylendiamin, Tetraethylenpentamin.

Bevorzugt verwendet man zum Einstellen des pH-Wertes ein oder mehrere basische Alkalimetallsalze. Als Beispiele für basische Alkalimetallsalze seien basische Kalium- und insbesondere Natriumsalze genannt, bevorzugt sind Kaliumhydroxid, Natriumhydroxid, Natriumcarbonat, Kaliumcarbonat, Natriumhydrogencarbonat, Kaliumhydrogencarbonat.

Einige der Comonomere können stark sauer sein. In dem Fall kann man in einer anderen Ausführungsform vor oder während der Copolymerisation eine schwache Säure oder einen Puffer zusetzen. Geeignete schwache Säuren oder Puffer sind Hydroxylammoniumsalze, beispielsweise das Sulfat oder Hydrogensulfat, oder Phosphorige Säure.

Vor, während oder nach der Copolymerisation kann man partiell oder vollständig neutralisieren, vorzugsweise mit einem oder mehreren basischen Alkalimetallsalzen, mit Ammoniak oder mit basischem Amin. Beispiele für basische Amine sind Ethylamin, Diethylamin, Triethylamin, n-Propylamin, Di-n-Propylamin, N,N-Diethanolamin, Ethanolamin, N-Methylethanolamin, N,N-Dimethylethanolamin, N-Methyl-N,N-diethanolamin, N-(n-propyl)-ethanolamin, N-(n-butyl)-ethanolamin und N-(n-butyl)-N,N-diethanolamin. Beispiele für basische Alkalimetallverbindungen sind Carbonate, Hydrogencarbonate und insbesondere Hydroxide von Alkalimetallen, insbesondere von Kalium oder Natrium. Besonders bevorzugt sind Kaliumhydroxid und Natriumhydroxid.

Bevorzugt ist es, zur Durchführung des erfindungsgemäßen Herstellungsverfahrens kurz vor Abschluss, beispielsweise nach mindestens 90% des Zeitraums, in dem man zu copolymerisieren wünscht, oder nach Abschluss der Copolymerisation weitere ethylenisch ungesättigte Dicarbonsäure (C-P2) oder ihr Anhydrid zuzusetzen. Unter "Abschluss der Copolymerisation" ist dabei zu verstehen, dass keine weitere Copolymerisation mehr stattfindet bzw. mehr nachweisbar ist, beispielsweise kein Wasser mehr zum Sieden gebracht wird. Die Copolymerisation kann zum Abschluss gebracht werden dadurch, dass alle Comonomere abreagiert haben. Man kann aber die Copolymerisation auch dadurch zum Abschluss bringen, indem man die Temperatur der Reaktionsmischung senkt. Je nach Zerfallscharakteristik des Radikalstarters beispielsweise auf Zimmertemperatur, wobei die Reaktionsmischung mindestens eines der vorstehend genannten Comonomere, das bis dahin gebildete Copolymer sowie Wasser umfasst.

Ethylenisch ungesättigte Dicarbonsäure (C-P2) bzw. ihr Anhydrid kann verschieden von ethylenisch ungesättigter Carbonsäure (C-P1) bzw. ihrem Anhydrid sein oder vorzugsweise gleich.

In einer Variante der vorliegenden Erfindung setzt man als ethylenisch ungesättigte Dicarbonsäure (C-P1) bzw. ihr Anhydrid ein Anhydrid ein, beispielsweise Itaconsäureanhydrid, Metaconsäureanhydrid oder insbesondere Maleinsäureanhydrid, und als weitere ethylenisch ungesättigte Dicarbonsäure (C-P2) bzw. ihr Anhydrid die korrespondierende ethylenisch ungesättigte Dicarbonsäure, also Itaconsäure bzw. Metaconsäure bzw. bevorzugt Maleinsäure.

Bei der Durchführung des erfindungsgemäßen Herstellungsverfahrens beobachtet man, dass weitere ethylenisch ungesättigte Dicarbonsäure (C-P2) bzw. ihr Anhydrid nicht oder nur zu einem geringen Anteil einpolymerisiert werden, insbesondere maximal 5 Gew.-%, bezogen auf zugesetzte ethylenisch ungesättigte Dicarbonsäure (C-P2) bzw. ihr Anhydrid. Besonders bevorzugt werden keine messbaren Anteile von ethylenisch ungesättigter Dicarbonsäure (C-P2) bzw. ihrem Anhydrid einpolymerisiert.

In einer Ausführungsform der vorliegenden Erfindung setzt man die Comonomere in folgenden Gewichtsverhältnissen ein:
im Bereich von 50 bis 98 Gew.-%, bevorzugt 70 bis 85 Gew.-% oder 50 bis 70 Gew.-% ethylenisch ungesättigte Carbonsäure (A),
im Bereich von 1 bis 30 Gew.-%, bevorzugt 1,5 bis 15 Gew.-% oder bis 25 Gew.-% Comonomer (B),
im Bereich von 1 bis 49 Gew.-%, bevorzugt 1,5 bis 15 Gew.-% ethylenisch ungesättigte Dicarbonsäure (C-P1) bzw. ihr Anhydrid.

Dabei sind Angaben in Gew.-% auf gesamtes erfindungsgemäßes Copolymer bezogen.

In einer Ausführungsform der vorliegenden Erfindung kann man ein oder mehrere weitere Comonomere einpolymerisieren, beispielsweise Acrylamid, Methacrylamid oder einen oder mehrere C₁-C₁₀-Alkylester von (Meth)acrylsäure. Dabei ist es bevorzugt, dass der Anteil an weiteren Comonomeren 50 Gewichtsanteile, bezogen auf die Summe aus ethylenisch ungesättigte Carbonsäure (A), Comonomer (B) und ethylenisch ungesättigte Dicarbonsäure (C-P1) bzw. ihr Anhydrid, nicht übersteigt.

In einer bevorzugten Ausführungsform der vorliegenden Erfindung polymerisiert man keine weiteren Comonomere ein, insbesondere keine der im vorstehenden Absatz genannten Comonomere.

Durch die Ausführung des erfindungsgemäßen Herstellungsverfahrens erhält man eine wässrige Formulierung, enthaltend Copolymer (D) und ethylenisch ungesättigte Dicarbonsäure (C-P2) bzw. ihr Anhydrid sowie gegebenenfalls gewisse Anteile an Restmonomeren, gewählt aus ethylenisch ungesättigte Carbonsäure (A), Comonomer (B) und insbesondere ethylenisch ungesättigte Dicarbonsäure (C-P1).

Nach dem erfindungsgemäßen Herstellungsverfahren hergestellte wässrige Formulierung kann einen Feststoffgehalt im Bereich von 1 bis 80%, bevorzugt 10 bis 50% aufweisen.

In einer Ausführungsform der vorliegenden Erfindung hat nach dem erfindungsgemäßen Herstellungsverfahren hergestelltes Copolymer (D) einen K-Wert im Bereich von 50 bis 110, bevorzugt von 20 bis 95, besonders bevorzugt von 35 bis 95 und ganz besonders bevorzugt von 60 bis 75, bestimmt nach Fikentscher an einer 1 Gew.-% wässrigen Lösung bei Zimmertemperatur.

Nach dem erfindungsgemäßen Herstellungsverfahren hergestellte wässrige Formulierungen kann man zur Herstellung von Leder einsetzen, bevorzugt zum Gerben und insbesondere zum Nachgerben.

In einer Ausführungsform der vorliegenden Erfindung vermischt man nach dem erfindungsgemäßen Herstellungsverfahren hergestellte wässrige Formulierung mit mindestens einem polymeren Gerb- oder Nachgerbmittel (E).

Polymere Gerb- und Nachgerbmittel (E) sind als solche bekannt. Beispiele sind die in EP 1 335 029 A1 als Gerbstoffe A) bis L) und N) genannten Homo- und Copolymere sowie die in WO 2004/070063, in WO 2005/019480 und die in WO 2006/015745 genannten Copolymere, wobei Terpolymere mit umfasst sind.

In einer Ausführungsform wählt man polymeres Gerb- oder Nachgerbmittel (E) aus Homo- und Copolymeren von ethylenisch ungesättigten Carbonsäuren (A), insbesondere von (Meth)acrylsäure. Bevorzugt sind insbesondere die in EP 1 335 029 A1 als Gerbstoffe A) bis D) genannten Homo- und Copolymere sowie die in WO 2005/019480 und die in WO 2006/015745 genannten Copolymere, wobei Terpolymere mit umfasst sind.

Ganz besonders bevorzugte polymere Gerb- und Nachgerbmittel (E) sind Homopolymere der (Meth)acrylsäure, insbesondere mit einem Molekulargewicht Mₙ im Bereich von 1.000 bis 200.000 g/mol.

Ganz besonders bevorzugte polymere Gerb- und Nachgerbmittel (E) sind Homopolymere der (Meth)acrylsäure mit einem K-Wert nach Fikentscher im Bereich von 10 bis 120, bevorzugt von 60 bis 100, bestimmt an der 1 Gew.-% mit NaOH neutralisierten wässrigen Lösung (pH-Wert 7) bei 23°C.

In einer Ausführungsform der vorliegenden Erfindung vermischt man erfindungsgemäßes Copolymer (D), beispielsweise in wässriger Formulierung, mit so viel polymerem Gerb- oder Nachgerbmittel (E), dass eine wässrige Formulierung erhalten wird, die bezogen auf ihre Gesamtmenge 5 bis 50 Gew.-%, bevorzugt 15 bis 30 Gew.-% Copolymer (D), eine entsprechende Menge ethylenisch ungesättigte Dicarbonsäure (C-P2) bzw. ihr Anhydrid und 1 bis 30 Gew.-%, bevorzugt 5 bis 15 Gew.-% polymeres Gerb- oder Nachgerbmittel (E) enthält.

Die Reihenfolge der Zugabe von nach dem erfindungsgemäßen Herstellungsverfahren hergestellter wässriger Formulierung und polymerem Gerb- oder Nachgerbmittel (E) ist beliebig.

Man kann polymeres Gerb- oder Nachgerbmittel (E) als Feststoff einsetzen oder vorzugsweise als wässrige Lösung oder Dispersion.

Ein weiterer Gegenstand der vorliegenden Erfindung sind wässrige Formulierungen, erhältlich durch Vermischen von nach dem erfindungsgemäßen Herstellungsverfahren erhältlichen wässrigen Formulierungen mit mindestens einem polymeren Gerb- oder Nachgerbmittel (E).

Ein weiterer Gegenstand der vorliegenden Erfindung sind wässrige Formulierungen, enthaltend
(D) mindestens ein Copolymer, erhältlich durch Copolymerisation von
   (A) mindestens einer ethylenisch ungesättigte Carbonsäure,
   (B) mindestens einem heterocyclischen Comonomer mit mindestens einer permanenten kationischen Ladung pro Molekül und
   (C-P1) mindestens einer ethylenisch ungesättigten Dicarbonsäure oder ihrem Anhydrid,
(E) gegebenenfalls mindestens ein polymeres Gerb- oder Nachgerbmittel und
(CP-2) mindestens eine ethylenisch ungesättigte Dicarbonsäure oder ihr Anhydrid.

Die vorstehend definierten wässrigen Formulierungen werden auch als erfindungsgemäße wässrige Formulierungen bezeichnet.

Polymere Gerb- und Nachgerbmittel (E) sind als solche bekannt. Beispiele sind die in EP 1 335 029 A1 als Gerbstoffe A) bis L) und N) genannten Homo- und Copolymere sowie die in WO 2004/070063, in WO 2005/019480 und die in WO 2006/015745 genannten Copolymere, wobei Terpolymere mit umfasst sind.

In einer Ausführungsform wählt man polymeres Gerb- oder Nachgerbmittel (E) aus Homo- und Copolymeren von ethylenisch ungesättigten Carbonsäuren (A), insbesondere von (Meth)acrylsäure. Bevorzugt sind insbesondere die in EP 1 335 029 A1 als Gerbstoffe A) bis D) genannten Homo- und Copolymere sowie die in WO 2005/019480 und die in WO 2006/015745 genannten Copolymere, wobei Terpolymere mit umfasst sind.

Ganz besonders bevorzugte polymere Gerb- und Nachgerbmittel (E) sind Homopolymere der (Meth)acrylsäure, insbesondere mit einem Molekulargewicht Mₙ im Bereich von 1.000 bis 200.000 g/mol.

Ganz besonders bevorzugte polymere Gerb- und Nachgerbmittel (E) sind Homopolymere der (Meth)acrylsäure mit einem K-Wert nach Fikentscher im Bereich von 10 bis 120, bevorzugt von 60 bis 100, bestimmt an der 1 Gew.-% vollständig mit NaOH neutralisierten wässrigen Lösung bei Zimmertemperatur.

Ethylenisch ungesättigte Carbonsäure (A), Comonomer (B), ethylenisch ungesättigte Dicarbonsäure (C-P1) bzw. ihr Anhydrid sowie ethylenisch ungesättigte Dicarbonsäure (C-P2) bzw. ihr Anhydrid sind vorstehend beschrieben.

Erfindungsgemäße wässrige Formulierung können einen Feststoffgehalt im Bereich von 1 bis 80%, bevorzugt 10 bis 50% aufweisen.

Erfindungsgemäße wässrige Formulierungen können einen pH-Wert im Bereich von 6,5 bis 11 aufweisen, bevorzugt 8 bis 10.

Ein weiterer Gegenstand der vorliegenden Erfindung ist die Verwendung von erfindungsgemäßen wässrigen Formulierungen zur Herstellung von Leder. Ein weiterer Gegenstand der vorliegenden Erfindung ist ein Verfahren zur Herstellung von Leder unter Verwendung von erfindungsgemäßen wässrigen Formulierungen. Ein weiterer Gegenstand der vorliegenden Erfindung ist Leder, hergestellt unter Verwendung von mindestens einer erfindungsgemäßen wässrigen Formulierung.

In einer Ausführungsform der vorliegenden Erfindung übt man das erfindungsgemäße Verfahren zur Herstellung von Leder als Gerbverfahren aus, im Folgenden auch als erfindungsgemäßes Gerbverfahren bezeichnet, bevorzugt als Nachgerbverfahren, im Folgenden auch als erfindungsgemäßes Nachgerbverfahren bezeichnet.

Das erfindungsgemäße Gerbverfahren übt man im Allgemeinen so aus, dass man mindestens eine erfindungsgemäße wässrige Formulierung in einer Portion oder in mehreren Portionen unmittelbar vor oder aber während des Gerbungsschrittes zusetzt. Das erfindungsgemäße Gerbverfahren wird vorzugsweise bei einem pH-Wert von 2,5 bis 11, bevorzugt bis 4 durchgeführt, wobei man häufig beobachtet, dass der pH-Wert während der Durchführung des erfindungsgemäßen Gerbverfahrens um etwa 0,3 bis drei Einheiten ansteigt.

Das erfindungsgemäße Gerbverfahren führt man im Allgemeinen bei Temperaturen von 10 bis 45°C, bevorzugt bei 20 bis 30°C durch. Bewährt hat sich eine Dauer von 10 Minuten bis 12 Stunden, bevorzugt sind eine bis drei Stunden. Das erfindungsgemäße Gerbverfahren kann man in beliebigen gerbereiüblichen Gefäßen durchführen, beispielsweise durch Walken in Fässern oder in gedrehten Trommeln.

In einer Ausführungsform der vorliegenden Erfindung setzt man insgesamt 0,01 bis 10 Gew.-% erfindungsgemäße wässrige Formulierung ein, bezogen auf den Feststoffgehalt von erfindungsgemäßer wässriger Formulierung einerseits und auf das Falzgewicht andererseits, bevorzugt sind 0,5 bis 3 Gew.-%.

In einer Variante des erfindungsgemäßen Gerbverfahrens setzt man erfindungsgemäße wässrige Formulierung zusammen mit einem oder mehreren herkömmlichen Gerbstoffen ein, beispielsweise mit Chromgerbstoffen, mineralischen Gerbstoffen, Syntanen, Polymergerbstoffen oder vegetabilen Gerbstoffen, wie sie beispielsweise beschrieben sind in Ullmann's Encyclopedia of Industrial Chemistry, Band A15, Seite 259 bis 282 und insbesondere Seite 268 ff., 5. Auflage, (1990), Verlag Chemie Weinheim. Das Gewichtsverhältnis erfindungsgemäße wässrige Formulierung : herkömmlicher Gerbstoff bzw. Summe der herkömmlichen Gerbstoffe beträgt zweckmäßig von 0,01 : 1 bis 100 : 1 (bezogen jeweils auf die Feststoffgehalte). In einer vorteilhaften Variante des erfindungsgemäßen Gerbverfahrens setzt man nur wenige ppm herkömmliches Gerbmittel erfindungsgemäßer wässriger Formulierung zu.

In einer Variante des erfindungsgemäßen Gerbverfahrens setzt man erfindungsgemäße wässrige Formulierung zusammen mit einem oder mehreren Fettungsmitteln bzw. oleophilen Komponenten ein.

In einer Variante des erfindungsgemäßen Gerbverfahrens setzt man erfindungsgemäße wässrige Formulierung in einer Portion oder in mehreren Portionen vor oder während des Vorgerbens zu. Auch ein Zusatz im Pickel ist denkbar.

Zur Durchführung des erfindungsgemäßen Nachgerbverfahrens geht man aus von konventionell, d.h. beispielsweise mit Chromgerbstoffen, mineralischen Gerbstoffen, Polymergerbstoffen, Aldehyden, Syntanen oder Harzgerbstoffen gegerbten Halbzeugen oder erfindungsgemäß wie oben beschrieben hergestellten Halbzeugen. Zur Durchführung des erfindungsgemäßen Nachgerbungsverfahrens lässt man mindestens eine erfindungsgemäße wässrige Formulierung auf Halbzeuge einwirken, d.h., man behandelt mit mindestens einer erfindungsgemäßen wässrigen Formulierung.

Das erfindungsgemäße Nachgerbverfahren kann man unter ansonsten üblichen Bedingungen durchführen. Man wählt zweckmäßig einen oder mehrere, d.h. 2 bis 6 Einwirkschritte und kann zwischen den Einwirkschritten mit Wasser spülen. Die Temperatur bei den einzelnen Einwirkschritten beträgt jeweils von 5 bis 60°C, bevorzugt 20 bis 45°C. Man setzt zweckmäßig einen oder mehrere weitere, während der Nachgerbung üblicherweise verwendete Mittel ein, beispielsweise Fettlicker, Polymergerbstoffe und Fettungsmittel auf Acrylat- und/oder Methacrylatbasis, Nachgerbstoffe auf Basis von Vegetabilgerbstoffen, Füllstoffe, Lederfarbstoffe oder Emulgatoren.

Bewährt hat sich für das erfindungsgemäße Nachgerbverfahren eine Dauer von 10 Minuten bis 12 Stunden, bevorzugt sind eine bis drei Stunden. Das erfindungsgemäße Nachgerbverfahren kann man in beliebigen gerbereiüblichen Gefäßen durchführen, beispielsweise durch Walken in Fässern oder in gedrehten Trommeln.

In einer Ausführungsform des erfindungsgemäßen Nachgerbverfahrens setzt man insgesamt 0,01 bis 10 Gew.-% erfindungsgemäße wässrige Formulierung ein, bezogen auf den Feststoffgehalt von erfindungsgemäßer wässriger Formulierung einerseits und auf das Falzgewicht andererseits, bevorzugt sind 0,5 bis 5 Gew.-%.

Ein weiterer Gegenstand der vorliegenden Erfindung ist Leder, hergestellt nach dem erfindungsgemäßen Verfahren. Erfindungsgemäßes Leder zeichnet sich durch gute Fülle, Weichheit und Intensität der Färbung und weitere gute Gebrauchseigenschaften wie beispielsweise die Prägbarkeit, die Festnarbigkeit und die Gleichmäßigkeit des Millbruchs bei Möbel- und Bekleidungsleder aus. Erfindungsgemäßes Leder eignet sich beispielsweise zur Herstellung von Schuhoberleder, Bekleidungsstücken wie beispielsweise Jacken, Mänteln oder Hosen, und weiterhin von Möbeln.

Ein weiterer Gegenstand der vorliegenden Erfindung sind Copolymere, im Rahmen der vorliegenden Erfindung auch als Copolymere (D) bezeichnet. Erfindungsgemäße Copolymere (D) enthalten einpolymerisiert:
(A) mindestens eine ethylenisch ungesättigte Carbonsäure,
(B) mindestens ein heterocyclisches Comonomer mit mindestens einer permanenten kationischen Ladung pro Molekül und
(C-P1) mindestens eine ethylenisch ungesättigte Dicarbonsäure oder ihr Anhydrid.

Ethylenisch ungesättigte Carbonsäuren (A), heterocyclische Comonomere (B) und Comonomer (C-P1) sind vorstehend beschrieben. Verfahren zur Herstellung von erfindungsgemäßen Copolymeren (D) sind ebenfalls vorstehend beschrieben. Erfindungsgemäße Copolymere (D) können partiell oder vollständig mit Ammoniak, basischem Amin oder basischer Alkalimetallverbindung, insbesondere mit Kaliumhydroxid oder Natriumhydroxid neutralisiert sein.

In einer Ausführungsform der vorliegenden Erfindung enthalten erfindungsgemäße Copolymere (D) einpolymerisiert:
im Bereich von 50 bis 98 Gew.-%, bevorzugt 70 bis 85 Gew.-% ethylenisch ungesättigte Carbonsäure (A),
im Bereich von 1 bis 30 Gew.-%, bevorzugt 1,5 bis 15 Gew.-% Comonomer (B),
im Bereich von 1 bis 49 Gew.-%, bevorzugt 1,5 bis 15 Gew.-% ethylenisch ungesättigte Dicarbonsäure (C-P1) bzw. ihr Anhydrid.

In einer Ausführungsform der vorliegenden Erfindung hat erfindungsgemäßes Copolymer (D) einen K-Wert im Bereich von 40 bis 110, bevorzugt von 50 bis 95, bestimmt nach Fikentscher an einer 1 Gew.-% wässrigen Lösung bei Zimmertemperatur.

In einer Ausführungsform der vorliegenden Erfindung weisen erfindungsgemäße Copolymere (D) ein mittleres Molekulargewicht M_{w} im Bereich von 20.000 bis 2.000.000 g/mol auf, bevorzugt sind 50.000 bis 1.000.000g/mol.

Ein weiterer Gegenstand der vorliegenden Erfindung sind Mischungen von erfindungsgemäßem Copolymer (D) mit mindestens einer ethylenisch ungesättigte Dicarbonsäure (CP-2) oder ihrem Anhydrid.

In einer Ausführungsform der vorliegenden Erfindung beträgt das Gewichtsverhältnis von (C-P1) zu (C-P2) im Bereich von 1:10 bis 10:1, bevorzugt sind 1:5 bis 5:1, besonders bevorzugt sind 1:1,5 bis 1,5:1.

Ein weiterer Gegenstand der vorliegenden Erfindung sind Mischungen von erfindungsgemäßem Copolymer (D) mit mindestens einem polymeren Gerb- oder Nachgerbmittel (E). Polymere Gerb- und Nachgerbmittel (E) sind vorstehend beschrieben.

Wünscht man erfindungsgemäße Mischungen oder erfindungsgemäßes Copolymer (D) wasserfrei darzustellen, so kann man beispielsweise so vorgehen, dass man zunächst wie vorstehend beschrieben eine wässrige Formulierung von erfindungsgemäßem Copolymer (D) herstellt und gegebenenfalls ethylenisch ungesättigte Dicarbonsäure (CP-2) oder ihr Anhydrid oder gegebenenfalls polymeres Gerb- oder Nachgerbmittel (D) zusetzt und danach nach an sich bekannten Methoden das Wasser entfernt. Bevorzugt ist es dabei, das Wasser durch Verdampfen zu entfernen, insbesondere durch Sprühtrocknung.

In einer Ausführungsform der vorliegenden Erfindung liegt in erfindungsgemäßen Mischungen das Gewichtsverhältnis von erfindungsgemäßem Copolymer (D) zu polymerem Gerb- bzw. Nachgerbmittel (E) im Bereich von 50 : 1 bis 1 : 6, bevorzugt 3 : 1 bis 1 : 3.

Ein weiterer Gegenstand der vorliegenden Erfindung sind wässrige Formulierungen, enthaltend mindestens ein erfindungsgemäßes Copolymer (D). Ein weiterer Gegenstand der vorliegenden Erfindung sind wässrige Formulierungen, enthaltend mindestens eine der vorstehend beschriebenen Mischungen.

Vorstehend erwähnte erfindungsgemäße wässrige Formulierungen können einen Feststoffgehalt im Bereich von 1 bis 80%, bevorzugt 10 bis 50% aufweisen.

Erfindungsgemäße Copolymere und erfindungsgemäße Mischungen eignen sich insbesondere in Form von wässrigen Formulierungen sehr gut zur Herstellung von Leder.

Die Erfindung wird durch Arbeitsbeispiele erläutert.

### I. Erfindungsgemäße Herstellung von Copolymeren (D)

### 1.1 Herstellung von erfindungsgemäßem Copolymer (D.1)

Man stellte die folgenden Lösungen her:
Lösung I.1.1: 237,7 g Acrylsäure (A.1) wurde in 279 g destilliertem Wasser gelöst.
Lösung I.1.2: 43,4 g 3-Methyl-N-vinylimidazoliummethylsulfat (QVI-Sulfat) (B.1) wurden in 53 g destilliertem Wasser gelöst. 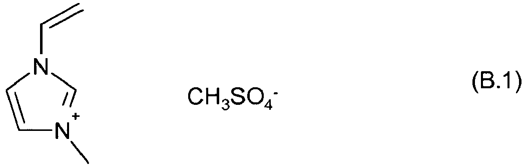
Lösung I.1.3: 2,4 g Na₂S₂O₈ wurden in 124,7 ml destilliertem Wasser gelöst.
Lösung I.1.4: 24,0 g Maleinsäure (C.2-P2) wurden in 72,1 ml destilliertem Wasser gelöst.

In einem 2-Liter-Rührgefäß mit mehreren Zuläufen, Rückflusskühler und Gaseinleitungsrohr legte man 225,6 ml destilliertes Wasser und 25,1 g Maleinsäureanhydrid (C.1-P1) vor. Dann ließ man Stickstoff durch die Vorlage sprudeln (15 Minuten) und erwärmte unter Rühren auf 90°C.

Danach begann man simultan mit der Zugabe von Lösung I.1.1, I.1.2 und I.1.3. Man gab Lösung I.1.1 und 1.1.2 innerhalb von 2 Stunden und Lösung I.1.3 innerhalb von 2 Stunden und 15 Minuten zu, wobei man weiter rührte. Man rührte weitere 90 Minuten bei 90°C nach und ließ dann auf 60°C abkühlen. Man gab danach zunächst schnell 264,1 g 50 Gew.-% wässrige Natronlauge zu, erwärmte danach auf 70°C und fügte innerhalb von 30 Minuten Lösung I.1.4 zu. Danach kühlte man auf Zimmertemperatur ab. Es bildete sich ein Niederschlag. Man fügte so lange 50 Gew.-% wässrige Natronlauge zu, bis sich der Niederschlag wieder aufgelöst hatte.

Man erhielt erfindungsgemäße wässrige Formulierung WF.1 mit einem pH-Wert von 8,4 und einem Feststoffgehalt von 32,4%, die neben Maleinsäure (als Natriumsalz) erfindungsgemäßes Copolymer (D.1) enthielt. Der K-Wert (nach Fikentscher), gemessen bei Zimmertemperatur an einer auf einen Feststoffgehalt von 1 Gew.-% verdünnten wässrigen Formulierung WF.1, betrug 91,3, das mittlere Molekulargewicht M_{w} betrug 590.000 g/mol, bestimmt durch Gelpermeationschromatographie.

### I.2 Herstellung von erfindungsgemäßem Copolymer (D.2)

Man stellte die folgenden Lösungen her:
Lösung I.2.1: 237,7 g Acrylsäure (A.1) und 38,40 g 3-Methyl-N-vinylimidazoliummethylsulfat (QVI-Sulfat) (B.1) wurden in 326,0 g destilliertem Wasser gelöst.
Lösung I.2.2: 2,4 g Na₂S₂O₈ wurden in 124,7 ml destilliertem Wasser gelöst.

In einem 2-Liter-Rührgefäß mit mehreren Zuläufen, Rückflusskühler und Gaseinleitungsrohr legte man 225,6 ml destilliertes Wasser und 25,07 g Maleinsäureanhydrid (C.1-P1) vor. Dann ließ man Stickstoff durch die Vorlage sprudeln (15 Minuten) und erwärmte unter Rühren auf 90°C.

Danach begann man simultan mit der Zugabe von Lösung I.2.1 und I.2.2. Man gab Lösung I.2.1 innerhalb von 2 Stunden und Lösung I.2.2 innerhalb von 2 Stunden und 15 Minuten zu, wobei man weiter rührte. Man rührte weitere 90 Minuten bei 90°C nach und ließ dann auf 60°C abkühlen. Man gab danach zunächst schnell 264,1 g wässrige Natronlauge (50 Gew.-%) zu. Anschließend wurde auf 70°C erwärmt, 20,29 g Maleinsäureanhydrid (C.1-P2) als Feststoff zugegeben und weitere 30 Minuten gerührt. Danach wurde mit 134,0 g wässriger Natronlauge (25 Gew.-%) auf einen pH-Wert von 6,5-7,5 eingestellt und 60 Minuten nachgerührt. Im Anschluss kühlte man auf Zimmertemperatur ab.

Man erhielt erfindungsgemäße wässrige Formulierung WF.2 mit einem pH-Wert von 7,4 und einem Feststoffgehalt von 33,3%, die neben Maleinsäure (als Natriumsalz) erfindungsgemäßes Copolymer (D.2) enthielt. Der K-Wert (nach Fikentscher), gemessen bei Zimmertemperatur an einer auf einen Feststoffgehalt von 1 Gew.-% verdünnten wässrigen Formulierung WF.2, betrug 91,4.

### I.3 Herstellung von erfindungsgemäßem Copolymer (D.3)

Man stellte die folgenden Lösungen her:
Lösung I.3.1: 276,0 g Acrylsäure (A.1) und 38 g 3-Methyl-N-vinylimidazoliummethylsulfat (QVI-Sulfat) (B.1) wurden in 322,0 g destilliertem Wasser gelöst.
Lösung I.3.2: 11,76 g Na₂S₂O₈ wurden in 156,2 ml destilliertem Wasser gelöst.

In einem 2-Liter-Rührgefäß mit mehreren Zuläufen, Rückflusskühler und Gaseinleitungsrohr legte man 223,2 ml destilliertes Wasser und 24,8 g Maleinsäureanhydrid (C.1-P1) vor. Dann ließ man Stickstoff durch die Vorlage sprudeln (15 Minuten) und erwärmte unter Rühren auf 90°C.

Danach begann man simultan mit der Zugabe von Lösung I.3.1 und I.3.2. Man gab Lösung I.3.1 innerhalb von 2 Stunden und Lösung I.3.2 innerhalb von 2 Stunden und 15 Minuten zu, wobei man weiter rührte. Man rührte weitere 90 Minuten bei 90°C nach und ließ dann auf 60°C abkühlen. Man gab danach zunächst schnell 261,2 g wässrige Natronlauge (50 Gew.-%) zu. Anschließend wurde auf 70°C erwärmt, 23,8 g Maleinsäureanhydrid (C.1-P2) als Feststoff zugegeben und weitere 30 Minuten gerührt. Danach wurde mit 61,9 g wässriger Natronlauge (50 Gew.-%) auf einen pH-Wert von 6,7 eingestellt und 45 Minuten nachgerührt. Im Anschluss kühlte man auf Zimmertemperatur ab.

Man erhielt erfindungsgemäße wässrige Formulierung WF.3 mit einem pH-Wert von 6,7 und einem Feststoffgehalt von 32,4%, die neben Maleinsäure (als Natriumsalz) erfindungsgemäßes Copolymer (D.3) enthielt. Der K-Wert (nach Fikentscher), gemessen bei Zimmertemperatur an einer auf einen Feststoffgehalt von 1 Gew.-% verdünnten wässrigen Formulierung WF.3, betrug 54,4.

### I.4 Herstellung von erfindungsgemäßem Copolymer (D.4)

Man stellte die folgenden Lösungen her:
Lösung I.4.1: 253,0 g Acrylsäure (A.1) und 15,8 g 3-Methyl-N-vinylimidazoliummethylsulfat (QVI-Sulfat) (B.1) wurden in 316,4 g destilliertem Wasser gelöst.
Lösung I.4.2: 7,05 g Na₂S₂O₈ wurden in 134,0 ml destilliertem Wasser gelöst.

In einem 2-Liter-Rührgefäß mit mehreren Zuläufen, Rückflusskühler und Gaseinleitungsrohr legte man 219,49 ml destilliertes Wasser und 24,4 g Maleinsäureanhydrid (C.1-P1) vor. Dann ließ man Stickstoff durch die Vorlage sprudeln (15 Minuten) und erwärmte unter Rühren auf 90°C.

Danach begann man simultan mit der Zugabe von Lösung I.4.1 und I.4.2. Man gab Lösung I.4.1 innerhalb von 2 Stunden und Lösung I.4.2 innerhalb von 2 Stunden und 15 Minuten zu, wobei man weiter rührte. Man rührte weitere 90 Minuten bei 90°C nach und ließ dann auf 60°C abkühlen. Man gab danach zunächst schnell 281,1 g wässrige Natronlauge (50 Gew.-%) zu. Anschließend wurde auf 70°C erwärmt, 23,4 g Maleinsäure (C.2-P2) als Feststoff zugegeben und weitere 30 Minuten gerührt. Danach wurde mit 60,9 g wässriger Natronlauge (50 Gew.-%) auf einen pH-Wert von 7.4 eingestellt und 45 Minuten nachgerührt. Im Anschluss kühlte man auf Zimmertemperatur ab.

Man erhielt erfindungsgemäße wässrige Formulierung WF.4 mit einem pH-Wert von 7,4 und einem Feststoffgehalt von 32,8%, die neben Maleinsäure (als Natriumsalz) erfindungsgemäßes Copolymer (D.4) enthielt. Der K-Wert (nach Fikentscher), gemessen bei Zimmertemperatur an einer auf einen Feststoffgehalt von 1 Gew.-% verdünnten wässrigen Formulierung WF.4, betrug 88.

### 1.5 Herstellung von erfindungsgemäßem Copolymer (D.5)

Man stellte die folgenden Lösungen her:
Lösung I.5.1: 217,6 g Acrylsäure (A.1) und 67,1 g 3-Methyl-N-vinylimidazoliummethylsulfat (QVI-Sulfat) (B.1) wurden in 337,4 g destilliertem Wasser gelöst.
Lösung I.5.2: 2,2 g Na₂S₂O₈ wurden in 114,2 ml destilliertem Wasser gelöst.

In einem 2-Liter-Rührgefäß mit mehreren Zuläufen, Rückflusskühler und Gaseinleitungsrohr legte man 232,5 ml destilliertes Wasser und 25,8 g Maleinsäureanhydrid (C.1-P1) vor. Dann ließ man Stickstoff durch die Vorlage sprudeln (15 Minuten) und erwärmte unter Rühren auf 90°C.

Danach begann man simultan mit der Zugabe von Lösung I.5.1 und I.5.2. Man gab Lösung I.5.1 innerhalb von 2 Stunden und Lösung I.5.2 innerhalb von 2 Stunden und 15 Minuten zu, wobei man weiter rührte. Man rührte weitere 90 Minuten bei 90°C nach und ließ dann auf 60°C abkühlen. Man gab danach zunächst schnell 241,8 g wässrige Natronlauge (50 Gew.-%) zu. Anschließend wurde auf 70°C erwärmt, 24,8 g Maleinsäure (C.2-P2) als Feststoff zugegeben und weitere 30 Minuten gerührt. Danach wurde mit 60,9 g wässriger Natronlauge (50 Gew.-%) auf einen pH-Wert von 7,6 eingestellt und 45 Minuten nachgerührt. Im Anschluss kühlte man auf Zimmertemperatur ab.

Man erhielt erfindungsgemäße wässrige Formulierung WF.5 mit einem pH-Wert von 7,5 und einem Feststoffgehalt von 31,8%, die neben Maleinsäure (als Natriumsalz) erfindungsgemäßes Copolymer (D.5) enthielt. Der K-Wert (nach Fikentscher), gemessen bei Zimmertemperatur an einer auf einen Feststoffgehalt von 1 Gew.-% verdünnten wässrigen Formulierung WF.5, betrug 94.

### I.6 Herstellung von erfindungsgemäßem Copolymer (D.6)

Man stellte die folgenden Lösungen her:
Lösung I.6.1: 235,1 g Acrylsäure (A.1) und 38,0 g 3-Methyl-N-vinylimidazoliummethylsulfat (QVI-Sulfat) (B.1) wurden in 315,6 g destilliertem Wasser gelöst.
Lösung I.6.2: 11,8 g Na₂S₂O₈ wurden in 156,2 ml destilliertem Wasser gelöst.

In einem 2-Liter-Rührgefäß mit mehreren Zuläufen, Rückflusskühler und Gaseinleitungsrohr legte man 223,2 ml destilliertes Wasser, 24,8 g Maleinsäureanhydrid (C.1-P1) und 4,7 g Phosphorige Säure vor. Dann ließ man Stickstoff durch die Vorlage sprudeln (15 Minuten) und erwärmte unter Rühren auf 90°C.

Danach begann man simultan mit der Zugabe von Lösung 1.6.1 und I.6.2. Man gab Lösung I.6.1 innerhalb von 3 Stunden und Lösung I.6.2 innerhalb von 3 Stunden und 15 Minuten zu, wobei man weiter rührte. Man rührte weitere 90 Minuten bei 90°C nach und ließ dann auf 60°C abkühlen. Man gab danach zunächst schnell 261,3 g wässrige Natronlauge (50 Gew.-%) zu. Anschließend wurde auf 70°C erwärmt, 20,1 g Maleinsäureanhydrid (C.1-P2) als Feststoff zugegeben und weitere 30 Minuten gerührt. Danach wurde mit 123,8 g wässriger Natronlauge (25 Gew.-%) ein pH-Wert von 6,2-7,2 eingestellt und 60 Minuten nachgerührt. Im Anschluss kühlte man auf Zimmertemperatur ab.

Man erhielt erfindungsgemäße wässrige Formulierung WF.6 mit einem pH-Wert von 6,6 und einem Feststoffgehalt von 33,2%, die neben Maleinsäure (als Natriumsalz) erfindungsgemäßes Copolymer (D.6) enthielt. Der K-Wert (nach Fikentscher), gemessen bei Zimmertemperatur an einer auf einen Feststoffgehalt von 1 Gew.-% verdünnten wässrigen Formulierung WF.6, betrug 51,9.

**Tabelle 1: Eigenschaften der erfindungsgemäßen Copolymere (D.1) bis (D.5) und der erfindungsgemäßen wässrigen Formulierungen (WF.1) bis (WF.5)**

| | | (A.1) [Gew.-%] | (B.1) [Gew.-%] | (C-P1) [Gew.-%] | (C-P2) [Gew.-%] | K-Wert | Feststoffgehalt | pH-Wert |
|---|---|---|---|---|---|---|---|---|
| (D.1) | WF.1 | 77,9 | 14,2 | 7,9 | 8,2 | 91,3 | 32,4 | 8,4 |
| (D.2) | WF.2 | 78,9 | 12,8 | 8,3 | 6,7 | 91,4 | 33,3 | 7,4 |
| (D.3) | WF.3 | 81,5 | 11,2 | 7,3 | 7,0 | 54,4 | 32,4 | 6,7 |
| (D.4) | WF.4 | 86,3 | 5,4 | 8,3 | 8,0 | 88 | 32,8 | 7,4 |
| (D.5) | WF.5 | 70,1 | 21,6 | 8,3 | 8,0 | 94 | 31,8 | 7,5 |
| (D.6) | WF.6 | 69,7 | 23,0 | 7,3 | 6,7 | 51,9 | 33,2 | 6,6 |

Angaben von Gew.-% von (A.1), (B.1) und (C-P1) beziehen sich auf gesamtes erfindungsgemäßes Copolymer (D.1) und addieren sich zu 100 Gew.-%, Angaben von Gew.-% von nicht-einpolymerisiertem (C-P2) beziehen sich auf gesamtes erfindungsgemäßes Copolymer (D).

### II. Nachgerbversuche mit erfindungsgemäßen Copolymeren und Vergleichscopolymer V-CP.7

### Herstellung von Schuhoberleder (allgemeine Vorschrift)

Angaben in % sind stets Gew.-% und beziehen sich auf das Falzgewicht, wenn nicht ausdrücklich anders angegeben. Die Angaben in % betreffen bei wässrigen Formulierungen stets den Feststoff- bzw. Wirkstoffanteil, wenn nicht ausdrücklich anders angegeben

Zwei handelsübliche Rinder-Wetblue (Fa. Packer, USA) wurden auf eine Stärke von 1,7 bis 1,9 mm gefalzt. Der Kernbereich wurde in je sechs Streifen zu je ca. 700 g geschnitten. Anschließend wurden die Streifen in einem Fass (50 l) und einer Flottenlänge von 200 % (bezogen auf Falzgewicht) im Abstand von 10 Minuten mit 1,5 Gew.-% Natriumformiat und 0,5 % Natriumbicarbonat sowie 1 % eines Naphthalinsulfonsäure-Formaldehyd-Kondensationsprodukts, hergestellt nach US 5,186,846, Beispiel "Dispergiermittel 1", versetzt. Nach 70 Minuten wurde die Flotte abgelassen. Die Streifen wurden dann auf separate Walk-Fässer 1 bis 6 verteilt.

Zusammen mit 100% Wasser wurden die Walk-Fässer 1 bis 7 bei 25 bis 35°C mit je 2 % einer 40%igen wässrigen Lösung von Polyacrylsäure (Mₙ 70.000 g/mol, pH-Wert 5,5) (E.1) versetzt. Nach einer Walkzeit von 20 Minuten wurden nacheinander jeweils 2 % Sulfongerbstoff aus EP-B 0 459 168, Beispiel K1, 4% Vegetabilgerbstoff Mimosa und 5 % der erfindungsgemäßen wässrigen Formulierung WF gemäß Tabelle 1 oder Vergleichsformulierung dosiert. Nach 60 Minuten wurden jeweils 2 Gew.-% einer 50 Gew.-% (Feststoffgehalt) wässrigen Lösung von Farbstoffen dosiert, deren Feststoffe wie folgt zusammengesetzt waren:
70 Gewichtsteile Farbstoff aus EP-B 0 970 148, Beispiel 2.18,
30 Gewichtsteile Acid Brown 75 (Eisenkomplex), Colour Index 1.7.16

Anschließend wurde weitere 30 Minuten im Fass gewalkt.

Anschließend wurde in mehreren Schritten zu 0,3 bis 0,5% mit Ameisensäure auf einen pH-Wert von 3,8 bis 4,2 abgesäuert. Nach 20 Minuten wurde die Flotte bezüglich der Auszehrung bewertet und abgelassen. Die Leder wurden mit 200 % Wasser gewaschen.

Danach wurden in 100 % Wasser (50 °C) 4 % eines Fettlickers nach WO 03/023069, Beispiel A, und nach 60 Minuten bei 15 Umdrehungen pro Minute 1% der oben genannten Farbstoffmischung dosiert. Nach 20 Minuten wurde mit 1 % Ameisensäure abgesäuert auf den pH-Wert von 3,8.

Die so erhältlichen Leder wurden gewaschen, getrocknet, gestollt und nach den in Tabelle 2 festgelegten Prüfkriterien bewertet. Man erhielt die erfindungsgemäßen Leder L.1 bis L.6 und das Vergleichsleder V-L.7. Die Bewertung erfolgte nach einem Notensystem von 1 (sehr gut) bis 5 (mangelhaft).

Bei Vergleichscopolymer V-CP.7 handelte es sich um ein statistisches Acrylsäure-Acrylamid-Copolymer mit einem K-Wert nach Fikentscher von 70 (1 Gew.-% Lösung in Wasser), Comonomerverhältnis in mol-%: (Acrylsäure:Acrylamid) 90:10.

**Tabelle 2: Erfindungsgemäße Schuhoberleder und ihre Eigenschaften**

| Leder | Copolymer | Fülle | Weichheit | Narbenfestigkeit | Feinheit der Narbentextur | Durchfärbung (Schnitt) | Egalität |
|---|---|---|---|---|---|---|---|
| L.1 | (D.1) | 1 | 2 | 2 | 2 | 1 | 2 |
| L.2 | (D.2) | 1,5 | 2,5 | 1,5 | 2,5 | 1,5 | 2,5 |
| L.3 | (D.3) | 2 | 2 | 1 | 1,5 | 1,5 | 2 |
| L.4 | (D.4) | 1,5 | 2 | 2 | 2 | 2,5 | 1,5 |
| L.5 | (D.5) | 1 | 2,5 | 1 | 1 | 2 | 2 |
| L.6 | (D.6) | 1 | 2 | 2 | 2,5 | 2 | 2 |
| V-L.7 | V-CP.7 | 2,5 | 3 | 2,5 | 3 | 2,5 | 2,5 |

Die erfindungsgemäßen Leder wiesen insbesondere hervorragende Fülle und Weichheit bei exzellenter Narbenfestigkeit auf. Vorteilhaft ist auch der Befund, dass hier die Gerbereihilfsmittel und Farbstoffe nicht nur im Leder gleichmäßiger verteilt werden, sondern auch ein besonders eng anliegender, feiner Narben beobachtet wird, was insbesondere ein Beurteilungskriterium für hochwertiges Oberleder darstellt.

## Patentansprüche

1. Verfahren zur Herstellung von wässrigen Formulierungen, **dadurch gekennzeichnet, dass** man
(A) mindestens eine ethylenisch ungesättigte Carbonsäure,
(B) mindestens ein heterocyclisches Comonomer mit mindestens einer permanenten kationischen Ladung pro Molekül und
(C-P1) mindestens eine ethylenisch ungesättigte Dicarbonsäure oder ihr Anhydrid
miteinander radikalisch copolymerisiert und kurz vor Abschluss oder nach Abschluss der Copolymerisation weitere ethylenisch ungesättigte Dicarbonsäure (C-P2) oder ihr Anhydrid zusetzt.

2. Verfahren nach Anspruch 1, **dadurch gekennzeichnet, dass** man bei einem pH-Wert im Bereich von 1 bis 7 copolymerisiert.

3. Verfahren nach einem der Ansprüche 1 oder 2, **dadurch gekennzeichnet, dass** man bei einer Temperatur im Bereich von 65 bis 120°C copolymerisiert.

4. Verfahren nach einem der Ansprüche 1 bis 3, **dadurch gekennzeichnet, dass** man die Comonomere in folgenden Gewichtsverhältnissen einsetzt:
im Bereich von 50 bis 98 Gew.-% ethylenisch ungesättigte Carbonsäure (A),
im Bereich von 1 bis 30 Gew.-% heterocyclisches Comonomer mit mindestens einer permanenten kationischen Ladung pro Molekül (B), und
im Bereich von 1 bis 49 Gew.-% ethylenisch ungesättigte Dicarbonsäure (C-P1) oder ihr Anhydrid.

5. Verfahren nach einem der Ansprüche 1 bis 4, **dadurch gekennzeichnet, dass** man ethylenisch ungesättigte Carbonsäure (A) wählt aus Acrylsäure oder Methacrylsäure.

6. Verfahren nach einem der Ansprüche 1 bis 5, **dadurch gekennzeichnet, dass** man Comonomer mit mindestens einer permanenten kationischen Ladung pro Molekül wählt aus Salzen von N-Vinyl-3-methylimidazolium.

7. Verfahren nach einem der Ansprüche 1 bis 6, **dadurch gekennzeichnet, dass** man mit mindestens einem polymeren Gerb- oder Nachgerbmittel (E) vermischt.

8. Verfahren nach einem der Ansprüche 1 bis 7, **dadurch gekennzeichnet, dass** man polymeres Gerb- oder Nachgerbmittel (E) wählt aus Homo- und Copolymeren von ethylenisch ungesättigten Carbonsäuren (A).

9. Wässrige Formulierungen, enthaltend
mindestens ein Copolymer (D), erhältlich durch Copolymerisation von
(A) mindestens einer ethylenisch ungesättigten Carbonsäure,
(B) mindestens einem heterocyclischen Comonomer mit mindestens einer permanenten kationischen Ladung pro Molekül und
(C-P1) mindestens einer ethylenisch ungesättigten Dicarbonsäure oder ihrem Anhydrid,
(CP-2) mindestens eine ethylenisch ungesättigte Dicarbonsäure oder ihr Anhydrid und
(E) gegebenenfalls mindestens ein polymeres Gerb- oder Nachgerbmittel.

10. Wässrige Formulierungen nach Anspruch 9, **dadurch gekennzeichnet, dass** man polymeres Gerb- oder Nachgerbmittel (E) wählt aus Homo- und Copolymeren von ethylenisch ungesättigten Carbonsäuren (A).

11. Verwendung von wässrigen Formulierungen nach Anspruch 9 oder 10 zur Herstellung von Leder.

12. Copolymere, die einpolymerisiert enthalten:
(A) mindestens eine ethylenisch ungesättigte Carbonsäure,
(B) mindestens ein heterocyclisches Comonomer mit mindestens einer permanenten kationischen Ladung pro Molekül und
(C-P1) mindestens eine ethylenisch ungesättigte Dicarbonsäure oder ihr Anhydrid.

13. Mischungen von mindestens einem Copolymer nach Anspruch 12 mit (CP-2) mindestens einer ethylenisch ungesättigten Dicarbonsäure oder ihrem Anhydrid.

14. Mischungen von mindestens einem Copolymer nach Anspruch 12 mit mindestens einem polymeren Gerb- oder Nachgerbmittel (E).

15. Wässrige Formulierungen, enthaltend mindestens ein Copolymer nach Anspruch 12.

## Claims

1. A process for the preparation of aqueous formulations, wherein
(A) at least one ethylenically unsaturated carboxylic acid,
(B) at least one heterocyclic comonomer having at least one permanent cationic charge per molecule and
(C-P1) at least one ethylenically unsaturated dicarboxylic acid or its anhydride
are subjected to free radical copolymerization with one another and, shortly before the end or after the end of the copolymerization, further ethylenically unsaturated dicarboxylic acid (C-P2) or its anhydride is added.

2. The process according to claim 1, wherein copolymerization is effected at a pH in the range from 1 to 7.

3. The process according to either of claims 1 and 2, wherein copolymerization is effected at a temperature in the range from 65 to 120°C.

4. The process according to any of claims 1 to 3, wherein the comonomers are used in the following weight ratios:
in the range from 50 to 98% by weight of ethylenically unsaturated carboxylic acid (A),
in the range from 1 to 30% by weight of heterocyclic comonomer having at least one permanent cationic charge per molecule (B), and
in the range from 1 to 49% by weight of ethylenically unsaturated dicarboxylic acid (C-P1) or its anhydride.

5. The process according to any of claims 1 to 4, wherein ethylenically unsaturated carboxylic acid (A) is selected from acrylic acid or methacrylic acid.

6. The process according to any of claims 1 to 5, wherein comonomer with at least one permanent cationic charge per molecule is selected from salts of N-vinyl-3-methylimidazolium.

7. The process according to any of claims 1 to 6, wherein mixing is effected with at least one polymeric tanning or retanning agent (E).

8. The process according to any of claims 1 to 7, wherein polymeric tanning or retanning agent (E) is selected from homo- and copolymers of ethylenically unsaturated carboxylic acids (A).

9. An aqueous formulation comprising
at least one copolymer (D) obtainable by copolymerization of
(A) at least one ethylenically unsaturated carboxylic acid,
(B) at least one heterocyclic comonomer having at least one permanent cationic charge per molecule and
(C-P1) at least one ethylenically unsaturated dicarboxylic acid or its anhydride,
(CP-2) at least one ethylenically unsaturated dicarboxylic acid or its anhydride and
(E) optionally, at least one polymeric tanning or retanning agent.

10. The aqueous formulation according to claim 9, wherein polymeric tanning or retanning agent (E) is selected from homo- and copolymers of ethylenically unsaturated carboxylic acids (A).

11. The use of aqueous formulations according to claim 9 or 10 for the production of leather.

12. A copolymer which comprises, incorporated in the form of polymerized units:
(A) at least one ethylenically unsaturated carboxylic acid,
(B) at least one heterocyclic comonomer having at least one permanent cationic charge per molecule and
(C-P1) at least one ethylenically unsaturated dicarboxylic acid or its anhydride.

13. A mixture of at least one copolymer according to claim 12 with
(CP-2) at least one ethylenically unsaturated dicarboxylic acid or its anhydride.

14. A mixture of at least one copolymer according to claim 12 with at least one polymeric tanning or retanning agent (E).

15. An aqueous formulation comprising at least one copolymer according to claim 12.

## Revendications

1. Procédé de fabrication de formulations aqueuses, **caractérisé en ce que**
(A) au moins un acide carboxylique éthyléniquement insaturé,
(B) au moins un comonomère hétérocyclique contenant au moins une charge cationique permanente par molécule, et
(C-P1) au moins un acide dicarboxylique éthyléniquement insaturé ou son anhydride,
sont copolymérisés les uns avec les autres par voie radicalaire et un acide dicarboxylique éthyléniquement insaturé (C-P2) supplémentaire ou son anhydride est ajouté peu avant la fin ou après la fin de la copolymérisation.

2. Procédé selon la revendication 1, **caractérisé en ce que** la copolymérisation est réalisée à un pH dans la plage allant de 1 à 7.

3. Procédé selon l'une quelconque des revendications 1 ou 2, **caractérisé en ce que** la copolymérisation est réalisée à une température dans la plage allant de 65 à 120 °C.

4. Procédé selon l'une quelconque des revendications 1 à 3, **caractérisé en ce que** les comonomères sont utilisés en les rapports en poids suivants :
dans la plage allant de 50 à 98 % en poids d'acide carboxylique éthyléniquement insaturé (A),
dans la plage allant de 1 à 30 % en poids de comonomère hétérocyclique contenant au moins une charge cationique permanente par molécule (B) et
dans la plage allant de 1 à 49 % en poids d'acide dicarboxylique éthyléniquement insaturé (C-P1) ou son anhydride.

5. Procédé selon l'une quelconque des revendications 1 à 4, **caractérisé en ce que** l'acide carboxylique éthyléniquement insaturé (A) est choisi parmi l'acide acrylique ou l'acide méthacrylique.

6. Procédé selon l'une quelconque des revendications 1 à 5, **caractérisé en ce que** le comonomère contenant au moins une charge cationique permanente par molécule est choisi parmi les sels de N-vinyl-3-méthylimidazolium.

7. Procédé selon l'une quelconque des revendications 1 à 6, **caractérisé en ce qu'**au moins un agent de tannage ou de retannage polymère (E) est mélangé.

8. Procédé selon l'une quelconque des revendications 1 à 7, **caractérisé en ce que** l'agent de tannage ou de retannage polymère (E) est choisi parmi les homo- et copolymères d'acides carboxyliques éthyléniquement insaturés (A).

9. Formulations aqueuses, contenant
au moins un copolymère (D), pouvant être obtenu par copolymérisation de
(A) au moins un acide carboxylique éthyléniquement insaturé,
(B) au moins un comonomère hétérocyclique contenant au moins une charge cationique permanente par molécule, et
(C-P1) au moins un acide dicarboxylique éthyléniquement insaturé ou son anhydride,
(C-P2) au moins un acide dicarboxylique éthyléniquement insaturé ou son anhydride, et
(E) éventuellement au moins un agent de tannage ou de retannage polymère.

10. Formulations aqueuses selon la revendication 9, **caractérisées en ce que** l'agent de tannage ou de retannage polymère (E) est choisi parmi les homo- et copolymères d'acides carboxyliques éthyléniquement insaturés (A).

11. Utilisation de formulations aqueuses selon la revendication 9 ou 10 pour la fabrication de cuir.

12. Copolymères, contenant sous forme copolymérisée :
(A) au moins un acide carboxylique éthyléniquement insaturé,
(B) au moins un comonomère hétérocyclique contenant au moins une charge cationique permanente par molécule, et
(C-P1) au moins un acide dicarboxylique éthyléniquement insaturé ou son anhydride.

13. Mélanges d'au moins un copolymère selon la revendication 12 avec
(C-P2) au moins un acide dicarboxylique éthyléniquement insaturé ou son anhydride.

14. Mélanges d'au moins un copolymère selon la revendication 12 avec au moins un agent de tannage ou de retannage polymère (E).

15. Formulations aqueuses, contenant au moins un copolymère selon la revendication 12.
